# EUROPEAN PATENT APPLICATION

(11) **EP 3 816 971 A1**
(43) Date of publication of application: **05.05.2021**
(21) Application number: 20204435.0
(22) Date of filing: 28.10.2020
(51) Int. Cl.: G08G 5/00, G06F 5/00

(54) **METHOD AND SYSTEM TO ABSTRACT DATA FROM AN AVIONICS DEVICE**

(30) Priority: 31.10.2019 US 201962928484 P
(71) Applicant: GE Aviation Systems LLC, Grand Rapids, MI 49512 (US)
(72) Inventor: LEAL HERRERA, Victor Mario, Grand Rapids, Michigan 49512 (US); HOCHWARTH, Joachim, Grand Rapids, Michigan 49512 (US)
(74) Representative: Openshaw & Co.

(57) **Abstract**

An Electronic Flight Bag (EFB) (20) includes memory storing a configuration data file (48) defining a set of data format definitions associated with a corresponding set of avionics systems, the set of data format definitions different from one another, an application module (52) configured to utilize a set of universal format data (54), and a data converter module (50) configured to receive data from any of the set of avionics systems, to adapt the received data to the set of universal format data (54) based on the configuration data file (48), and to provide the set of universal format data (54) to the application module (52).

## Description

### CROSS REFERENCE TO RELATED APPLICATION(S)

This application claims priority to and benefit of U.S. Provisional Patent Application No. 62/928,484, filed October 31, 2019, which is incorporated herein in its entirety.

### TECHNICAL FIELD

This disclosure relates generally to interfacing a device for communication between the device and an avionics device.

### BACKGROUND

For contemporary aircraft, an avionics "platform" includes of a variety of elements such as sensors, data concentrators, a data communications network, radio frequency sensors and communication equipment, computational elements, operational or functional elements, and graphical displays. These components can share information with other components over the data communications network.

Transfer of data to and from components, or over the data communications network, can utilize specialized data networks, such as Aeronautical Radio Inc. (ARINC) compliant data networks, and can define standards or specifications for network operations, including data transmissions. Different aircraft or avionics platforms can further utilize different specialized data networks, data formats, system formats, or the like.

### BRIEF DESCRIPTION

In one aspect, the present disclosure relates to an Electronic Flight Bag (EFB), including memory storing a configuration data file defining a set of data format definitions associated with a corresponding set of avionics systems, the set of data format definitions different from one another, an application module configured to utilize a set of universal format data, and a data converter module configured to receive data from any of the set of avionics systems, to adapt the received data to the set of universal format data based on the configuration data file, and to provide the set of universal format data to the application module.

In another aspect, the present disclosure relates to specialized data network for a set of aircraft, including at least one avionics system for each of the set of aircraft, the at least one avionics system defining a set of avionic system data formats for exchanging data of the at least one avionics system and the specialized data network, and wherein the set of avionics system data format is different from at least one other at least one avionics system for another of the set of aircraft, and a removable Electronic Flight Bag (EFB), further including memory storing a configuration data file defining each of the set of avionics system data formats associated with the corresponding set of avionics systems, an application module configured to utilize a set of universal format data, and a data converter module configured to receive data from any of the at least one avionics system for each of the set of aircraft, to adapt the received data to the set of universal format data based on the configuration data file, and to provide the set of universal format data to the application module.

These and other features, aspects and advantages of the present disclosure will become better understood with reference to the following description and appended claims. The accompanying drawings, which are incorporated in and constitute a part of this specification, illustrate aspects of the disclosure and, together with the description, serve to explain the principles of the disclosure.

### BRIEF DESCRIPTION OF THE DRAWINGS

A full and enabling disclosure of the present description, including the best mode thereof, directed to one of ordinary skill in the art, is set forth in the specification, which makes reference to the appended figures, in which:
FIG. 1 is a top down schematic view of an example aircraft and avionics data network architecture of an aircraft, in accordance with various aspects described herein.
FIG. 2 is a schematic view of an example avionics data network of FIG. 1, in accordance with various aspects described herein.
FIG. 3 is a schematic view of an example avionics data networking defining communication between an Electronic Flight Bag (EFB) and an avionics system, in accordance with various aspects described herein.

### DETAILED DESCRIPTION

Aspects of the disclosure described herein are provided with respect to a specialized avionics data protocol, but it will be understood that the apparatus and method described herein can be implemented in any environment using a data communications network interconnecting a set of data-generating components or devices with a set of data-consuming components or avionics systems, computers, or the like. Aspects of the disclosure can include data communications networks configured to operate according to defined network characteristics or specifications. For example, contemporary aircraft operate a set of components interconnected by way of a data network defined by a network standard, such as the ARINC-based standards, for example ARINC 429 (A429) specification, ARINC 664 (A664), Ethernet, or the like, which are incorporated herein in their entirety. Furthermore, while the aforementioned examples can include network topology examples, application level protocol standards, including but not limited to, ARINC 702A (A702A), ARINC 834 (A834), or the like, can be included in their entirety. While aspects of the disclosure refer to the ARINC-based specifications, aspects of the disclosure are applicable to other specialized data networks, or the like utilized for data transmissions between a set of interconnected data sources and data destinations.

Furthermore, as used herein, the term "set" or a "set" of elements can be any number of elements, including only one. When referencing a "set" of data, it will be understood that the "set" of data can include no data, or null data. Also, as used herein, while sensors can be described as "sensing" or "measuring" a respective value, sensing or measuring can include determining a value indicative of or related to the respective value, rather than directly sensing or measuring the value itself. The sensed or measured values can further be provided to additional components. For instance, the value can be provided to a controller module or processor, and the controller module or processor can perform processing on the value to determine a representative value or an electrical characteristic representative of said value.

All directional references (e.g., radial, axial, upper, lower, upward, downward, left, right, lateral, front, back, top, bottom, above, below, vertical, horizontal, clockwise, counterclockwise) are only used for identification purposes to aid the reader's understanding of the disclosure, and do not create limitations, particularly as to the position, orientation, or use thereof. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other. In non-limiting examples, connections or disconnections can be selectively configured to provide, enable, disable, or the like, an electrical connection or communicative connection between respective elements. Additionally, as used herein, "electrical connection" or "electrically coupled" can include a wired or wireless power or data (e.g. communicative or transmissive) connection between respective components.

Additionally, as used herein, a "controller" or "controller module" can include a component configured or adapted to provide instruction, control, operation, or any form of communication for operable components to affect the operation thereof. A controller module can include any known processor, microcontroller, or logic device, including, but not limited to: Field Programmable Gate Arrays (FPGA), an Application-Specific Integrated Circuit (ASIC), a Full Authority Digital Engine Control (FADEC), a Proportional controller (P), a Proportional Integral controller (PI), a Proportional Derivative controller (PD), a Proportional Integral Derivative controller (PID controller), a hardware-accelerated logic controller (e.g. for encoding, decoding, transcoding, etc.), the like, or a combination thereof. Non-limiting examples of a controller module can be configured or adapted to run, operate, or otherwise execute program code to affect operational or functional outcomes, including carrying out various methods, functionality, processing tasks, calculations, comparisons, sensing or measuring of values, or the like, to enable or achieve the technical operations or operations described herein. The operation or functional outcomes can be based on one or more inputs, stored data values, sensed or measured values, true or false indications, or the like.

While "program code" is described, non-limiting examples of operable or executable instruction sets can include routines, programs, objects, components, data structures, algorithms, etc., that have the technical effect of performing particular tasks or implement particular abstract data types. In another non-limiting example, a controller module can also include a data storage component accessible by the processor, including memory, whether transient volatile or non-transient, or NonVolatile Memory (NVM). Additional non-limiting examples of the memory can include Random Access Memory (RAM), Read-Only Memory (ROM), flash memory, or one or more different types of portable electronic memory, such as discs, DVDs, CD-ROMs, flash drives, Universal Serial Bus (USB) drives, the like, or any suitable combination of these types of memory. In one example, the program code can be stored within the memory in a machine-readable format accessible by the processor. Additionally, the memory can store various data, data types, sensed or measured data values, inputs, generated or processed data, or the like, accessible by the processor in providing instruction, control, or operation to affect a functional or operable outcome, as described herein.

In another non-limiting example, a control module can include comparing a first value with a second value, and operating or controlling operations of additional components based on the satisfying of that comparison. For example, when a sensed, measured, or provided value is compared with another value, including a stored or predetermined value, the satisfaction of that comparison can result in actions, functions, or operations controllable by the controller module. As used, the term "satisfies" or "satisfaction" of the comparison is used herein to mean that the first value satisfies the second value, such as being equal to or less than the second value, or being within the value range of the second value. It will be understood that such a determination may easily be altered to be satisfied by a positive/negative comparison or a true/false comparison. Example comparisons can include comparing a sensed or measured value to a threshold value or threshold value range.

The exemplary drawings are for purposes of illustration only and the dimensions, positions, order and relative sizes reflected in the drawings attached hereto can vary.

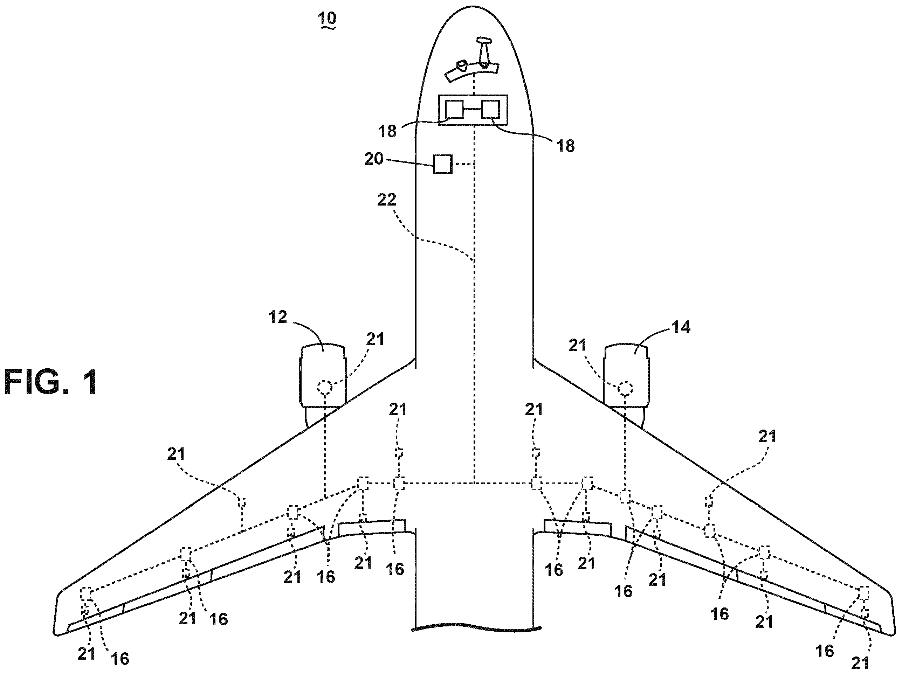

As illustrated in FIG. 1, an aircraft 10 can include at least one propulsion engine, shown as a left engine system 12 and right engine system 14. The aircraft 10 can further include one or more data sources, that is, components that create, originate, or otherwise generate data, and data destinations, that is, components that receive, consume, process, or otherwise act on or effect an outcome or operation based on data received. As shown, the aircraft 10 can include one or more avionics systems 18, including, but not limited to data storage or processing units, or functional systems such as the Flight Management System (FMS) or autopilot system, and a set of fixed aircraft components, such as Line-Replaceable Units (LRUs) 21, networking end nodes, or modular components of a vehicle or aircraft.

Additional communicative devices can be included and connectable with the aircraft 10, and can include, but is not limited to, a Connected Flight Management System (CFMS) of an FMS or EFB operational aspects, functional operations, or the like. FIG. 1 illustrates a representative EFB 20 as one non-limiting example. The CFMS or EFB 20 can include moveable, mobile, or otherwise removable devices that are adapted or configured to communicate with the aircraft 10, avionics system 18, LRUs 21, or the like, by way of a series of transmission pathways 22, network relays, or network switches 16 (collectively, a "network mesh"). In contrast, the avionics system 18, and the LRUs 21 can include stationary data sources. As used herein, "stationary" denotes that the avionics system 18 or LRU 21 can include devices that are generally fixed or incorporated into the aircraft 10 and would require significant work or maintenance services to remove from the aircraft 10, whereas "non-stationary" devices such as the EFB 20 can include devices that can be moveable relative to the aircraft or data network, such as carried by one the flight crew from one location to another either on, or off the aircraft 10. Non-limiting examples of the EFB 20 can include a handheld device such as a tablet, palm-pilot, pager, portable computer, smart device, or the like, that can be carried onto the aircraft 10 by the flight crew. In contrast, a stationary the avionics system 18 or LRU 21 can be, for example, a cockpit display, cockpit computer, or the like. In another example, the EFB 20 can be stationary.

In the aircraft environment, the avionics system 18, or the EFB 20, the transmission pathways 22, and the like, can be designed, configured, or adapted to operate according to a particular operation, interoperability, or form factor standards, such as those defined by ARINC series standards. In the exemplary aspects illustrated, the avionics system 18 can be positioned near the nose, cockpit, or pilot of the aircraft 10 and the EFB 20 can be positioned near the nose, cockpit, or pilot of the aircraft 10, however, any relative arrangement can be included.

The avionics system 18 and EFB 20 can be configured to be communicatively coupled by way of the series of transmission pathways 22, network relays, or network switches 16. While network switches 16 are schematically illustrated, non-limiting aspects of the disclosure can be applied to peer-to-peer networks. The transmission pathways 22 can include a physical connection between the respective components, such as a wired connection including Ethernet, or can include wireless transmission connections, including, but not limited to, WiFi (e.g. 802.11 networks), Bluetooth, and the like. Collectively, the avionics system 18, EFB 20, transmission pathways 22, and switches 16 can form an avionics data network, or avionics-specific data network for the aircraft.

The aircraft 10, and the systems thereof, can be communicatively interconnected by way of the avionics-specific data network such has an ARINC-compatible data network or ARINC-compliant data network. The avionics-specific data network can be, in one non-limiting example, an A429 compatible data network. It will be appreciated that the aircraft 10, and the systems thereof can be any avionics-specific data network compatible with any ARINC data network, including but not limited to an A664 data network, or any other known avionics-specific data network.

The EFB 20 can include, for example, entirely contained systems, radios, or other auxiliary equipment to manage or operate aircraft functions. At least a set of avionics system 18 or EFB 20 can, for example, generate data, which can be modified, computed, or processed prior to, or in preparation for packaging the data into data frames to be transmitted over the avionics data network by way of the transmission pathways 22 or switches 16. At least another set of avionics system 18 or EFB 20 can, for example, consume the data transmitted over the avionics data network. In some instances, a single avionics system 18 or EFB 20 can operate to both generate and consume data. As used herein, "consume," "consuming," or "consumption" of data will be understood to include, but is not limited to, performing or executing a computer program, routine, calculation, or process on at least a portion of the data, storing the data in memory, or otherwise making use of at least a portion of the data.

The illustrated aircraft 10 is merely one non-limiting example of an aircraft 10 that can be used in aspects of the disclosure described herein. Particularities of the illustrated aircraft 10 aspects, including relative size, length, number of engines, type of engines, and location of various components are not germane to the aspects of the disclosure, unless otherwise noted.

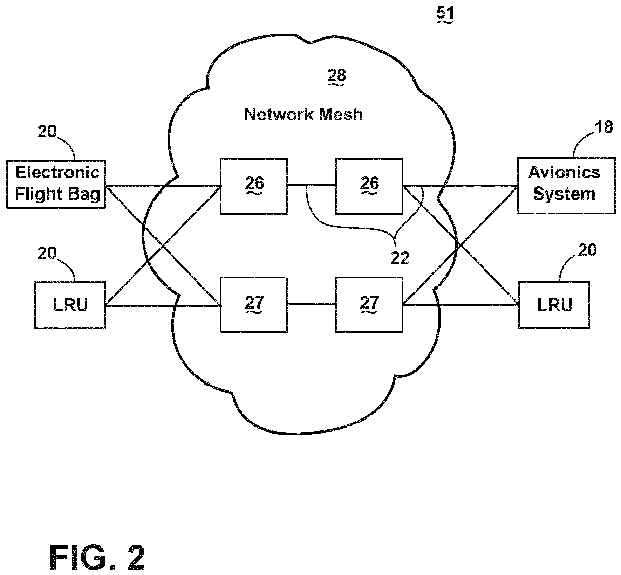

FIG. 2 illustrates a non-limiting schematic view of a specialized data network 51 according to aspects of the disclosure. The specialized data network 51 can include various components, and perform the functions of an avionics data network outlined herein. The specialized data network can include, but is not limited to, a set of redundant network switching units, such as a first set of switching units 26 defining a first path and a second set of switching units 27 defining a second, or redundant, path. The first and second switching units 26, 27 collectively define a network mesh 28 for routing the transmission of data frames between respective components, such as to and from the avionics system 18, and EFB 20 via the transmission pathways 22. As previously described, the transmission pathways 22 can be any communicative pathway, including but not limited to, wired or wireless communication connections. In one non-limiting example, the network mesh 28 is further shown having a set of transmission pathways 22 between the network switching units 26, 27 to provide redundancy in transmission pathways 22. In one non-limiting example, the network mesh 28, the first set of switching units 26, the second set of switching units 27, or a combination thereof, can be arranged, configured, or otherwise enabled to utilize a specialized data network 51 transmission schema. The aspects of the disclosure illustrated in FIG. 2 is merely one representation of the specialized data network 51, and alternative configurations, organization, and component quantities, including, but not limited to, avionics system 18, including but not limited to the EFB 20, LRUs 21, or network switching units 26, are envisioned.

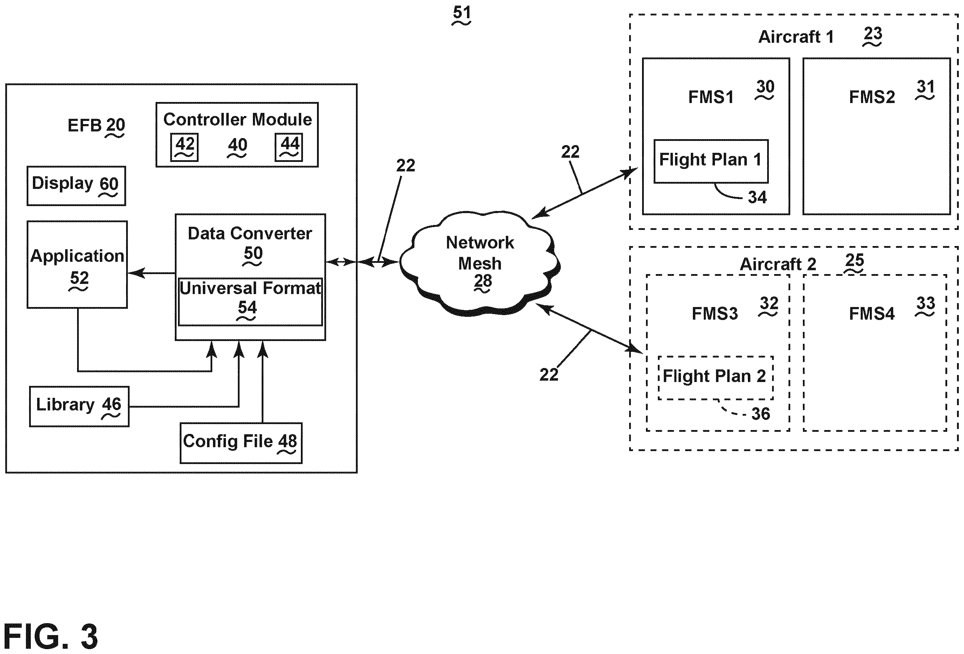

FIG. 3 illustrates additional details of the specialized data network 51, the EFB 20, and a set of avionics systems in a first aircraft 23, illustrated as a first FMS 30 and a second FMS 31. Only the first FMS 30 is described for brevity. The first FMS 30 can include avionics data, or the like, including, but not limited to, a first flight plan 34 associated with the first FMS 30. The first FMS 30 can define a particular or specific set of first flight plan data 34, including data having a defined format. For example, the set of first flight plan data 34 can include a first formatting, including, but not limited to, 320-bit waypoints, 12 types of segments, 64-bit prediction blocks (defining at least a set of flight plan prediction data), or the like. While examples of 320-bit waypoints, 12 types of segments, 64-bit prediction blocks are described, actual first flight plan data 34 can include additional or alternative formatting, including additional bits of data. The examples provided herein are merely for understanding, and not limiting.

Conversely, with respect to the first FMS 30 having a set of first flight plan data 34 in a first defined format, a different or second aircraft 25 can include a third FMS 32 (shown in dotted outline) and a fourth FMS 33. Only the third FMS 32 is described for brevity. The third FMS 32 can include avionics data, or the like, including, but not limited to, a second flight plan 36 associated with the third FMS 32. The third FMS 32 can define a particular or specific set of second flight plan data 36, including data having a defined format. For example, the set of second flight plan data 36 can include a second formatting, including, but not limited to, 640-bit waypoints, 21 types of segments, 96-bit prediction blocks, or the like. While examples of 640-bit waypoints, 21 types of segments, 96-bit prediction blocks are described, actual second flight plan data 36 can include additional or alternative formatting, including additional bits of data. The examples provided herein are merely for understanding, and not limiting. Furthermore, either the first or third FMS 30, 32 may include routines mounted on top of a network device that can potentially modify the output from one of the FMS systems 30, 32 within the same aircraft.

In this sense, the formatting of the set of first flight plan data 34 can be different from the formatting of the set of second flight plan data 36. While the schematic representation of FIG. 3 illustrates potentially a first FMS 30 and a third FMS 32, each having distinct data formatting, communicatively connected with the specialized data network 51, it is understood that in a single aircraft 10, disparate FMS 30, 32 or FMS data formatting is unlikely. The schematic representation of FIG. 3 is included to show that an EFB 20 can be interconnected with different FMS 30, 32 systems across different aircraft 10 or airframes, and that different FMS 30, 32 systems can include different data formatting.

Non-limiting aspects of the EFB 20 can be included wherein the EFB 20 further includes a controller module 40 having a processor 42 and memory 44, a library data file 46, and a configuration data file 48. In one example, the configuration data file 48 can include a set of different data format definitions, including, but not limited to, the first and second data format definitions associated with the formatting of the set of first flight plan data 34 or the formatting of the set of second flight plan data 36. The EFB 20 can further include a data converter module 50, an application module 52, and a display module 60. Non-limiting aspects of the disclosure can be included wherein the data converter module 50 can receive as input the library data file 46 and the configuration data file 48, and can generate a new set of data, shown as universal format data 54. The data converter module can further provide the universal format data 54 to the application module 52, which can further make use of, or otherwise utilize, the data of the universal format data 54. In another non-limiting example, the application module 52 can receive the universal format data 54 and display aspects of the data on the display module 60.

The configuration data file 48 can include a data file that will be "consumed" or otherwise utilized by the data converter module 50, the application module 52, or another internal module of the library data file 46 in order to consume data. This configuration data file 48, for example, can define how a set of decoded data shall be reformatted and under which behaviors and circumstances it shall be reformatted. Also, the configuration data file 48 can define that when some data reaches certain thresholds, it can trigger certain formats (e.g. when the data set that contains the altitude has a value of greater than 10,000 feet, then show the data with the format Y, otherwise use X). Moreover, the configuration data file 48 can also indicate the application module 52 to use certain predefined functions (e.g. km to mile conversions) or it can define other primitive operations or functions (e.g. ratios, algebraic operations) that shall be available and triggerable under circumstances defined in the configuration data file 48.

During operations of the EFB 20, such as during aircraft flights, the EFB 20 will receive at least a set of data from an FMS system, such as the set of first flight plan data 34 from the first FMS 30, by way of the specialized data network 51. When the EFB 20 is configured to receive and interpret the data in the first format of the first flight plan data 34, the application module 52 can receive the first flight plan data 34 and utilize or otherwise use the data of the first flight plan data 34. However, due to the formatting requirements of the first format of the first FMS 30 or the first flight plan data 34, using, utilizing, or otherwise including the same EFB 20 in communication with the third FMS 32 (e.g. such as bringing the EFB 20 on a second airframe or second aircraft 25 with a third, different FMS 32), the different data formatting of the second flight plan data 36 can be inconsistent. In one example, a developer of the application module 52 might have to recompile or redevelop the application module 52 to make use of the second format of the second flight plan data 36, which is time consuming and costly.

Aspects of the disclosure enable and allow for a conversion, translation, or otherwise modification of data received from the specialized data network 51 into a common or "universal" format of data for use or utilization of the EFB 20 (or a subsystem thereof), or another system external to the FMS, regardless of the originating format of the data.

As shown, any format of data received by the EFB 20, by way of the specialized data network 51, can be provided to the data converter module 50. The data converter module 50, in turn, and informed by the input of the library data file 46, the configuration data file 48, or a combination thereof, can convert, translated, or otherwise modify the data received into the common or universally-formatted universal format data 54. The universal format data 54 can then be provided to the application module 52 (for example, by schematic arrow 56). The application module 52 in this instance can be developed or otherwise configured to be able to read, utilize, or otherwise interpret the universal format of the universal format data 54 to perform application functions, as designed. In this example, the application module 52 does not need to understand, interpret, or even become aware of the data format of the data received from the specialized data network.

In addition to reformatting the data into a universal format, the data converter module 50 can perform additional data adjustments, changes, manipulation, or the like. For example, in addition to selecting and implementing a common numbered-bit waypoint, number of types of segments, numbered-bit prediction blocks, or the like, non-limiting aspects of the disclosure can be included wherein the data converter module 50 can additionally or alternatively include universal data structures or similar formats, generate advanced representations of the data received, perform calculations or processing on the data received, or the like. In some instances, the conversions can be predefined by way of the library data file 46 or the configuration data file 48, and operate in run-time. In one example, advanced representations of the data received can include, but is not limited to, increasing the readability of the data received or data structures received, to utilize alternative vernacular descriptions of the data received (e.g. relabel or the like, based on developer or pilot vernacular), or to "scramble" or reorder the data received or data structures received for use or utilization. In one non-limiting example, the data converter 50, the library data file 46, of the like, could also hold or store continuously received data sets from the same objects and display them once each "X" number or successful receive operations in order to provide averages, means, or the like. As used herein, "X" is a generic placeholder for a predetermined number of operations. Moreover, the library data file 46 can hold or store different received data sets and make them look as a single-larger-superset. In another non-limiting example, the data converter module 50 can be configured to act as a temporary or transient data store, e.g. not for providing longer-term storing or hoarding of data that are ready for consumption. In this example, as soon as the data has been converted or modified as described herein, that data can be made available or provided to the application module 52 or library data file 46.

In another non-limiting example, the data converter module 50 can operably include converting of the formatted data received to universal format data 54 including raw data, container for holding the raw data or additional containers, or potentially any data formatting that mimics commonly utilized programming data structures or programming languages, including by not limited to C++ and Ada data structures (i.e. programming language data structures). In this example, the raw data can be renamed (e.g. data mapping) as desired. The universal format data 54 can further be mutable, hold encoded values, or cause or respond to the execution of predefined calls as defined by the library data file 46, the configuration data file 48, or a combination thereof.

In this sense, aspects of the disclosure, the EFB 20, or a system or subsystem thereof can not only abstract data from the particular data formatting of the communicatively connected FMS 30, 32, but also modify and convert the data or data types to improve data utilization by other EFB 20 systems, such as the application module 52. In this sense, a developer of the application module 52 need only develop a single module without have to re-develop an application module 52 based on a per-aircraft or per-airframe basis, and regardless of what FMS 30, 32 is communicating. Additionally, the data conversion can be accomplished in real-time.

In another non-limiting aspect of the disclosure, the data conversion by way of the data converter module 50 can also be bi-directional. For example, the application module 52, utilizing the universal format data 54 and operably affect a change in the data, such as editing, modifying, or requesting a change to the flight plan of the respective FMS. In this instance, user input, or an application module-generated input or output can be provided (via schematic arrow 58) to the data converter module 50. The data converter module 50, in turn, can receive the requested change, and by way of converting universal format data 54 back to the formatted data of the FMS (e.g. the same first format of the set of first flight plan data 34), and deliver the change back to the first FMS 30 by way of the specialized data network 51, in the native first format utilized by the first FMS 30 or the set of first format data 34.

Many other possible aspects and configurations in addition to that shown in the above figures are contemplated by the present disclosure. While flight plan data is specifically described herein, aspects of the disclosure can be applicable to generating or converting any formatted data to a universal format of data. In another non-limiting example, the library data file 46 and the configuration data file 48 information or functionality can be combined into a single data file element. In another non-limiting example, some functional or data aspects can be contained within other functional or data aspects. For example, it will be understood that, the data converter module 50 can be positioned within the library data file 46, or vice versa. In another non-limiting example, communication can be in alternative configurations, such as wherein the configuration data file 48 provides input to the library data file 46, which further provides input to the data converter module 50.

The aspects disclosed herein provide a system adapted to automatically convert data formats from multiple FMS data formats into a common universal format of data, for use or utilization by the EFB. The technical effect is that the above-described aspects enables a connected EFB or compatible application be able to interact with different builds, formats, versions, or the like, of an FMS or FMS architecture without requiring redevelopment or recompiling of the EFB, and in real-time execution of the EFB. Instead, it will only depend on loading a different data abstraction definition file, such as the library data file 46 or the configuration data file 48. One advantage that can be realized in the above aspects is that the above described aspects enables and increases the reusability of the EFB software or application modules since they can be bound to any embedded device by coding it once. This will improve the use to the data conversion, ensuring applicable use of the FMS data over longer periods of time, and even of future FMS configurations.

To the extent not already described, the different features and structures of the various aspects can be used in combination with each other as desired. That one feature cannot be illustrated in all of the aspects is not meant to be construed that it cannot be, but is done for brevity of description. Thus, the various features of the different aspects can be mixed and matched as desired to form new aspects, whether or not the new aspects are expressly described. Combinations or permutations of features described herein are covered by this disclosure.

This written description uses examples to disclose aspects of the disclosure, including the best mode, and also to enable any person skilled in the art to practice aspects of the disclosure, including making and using any devices or systems and performing any incorporated methods. The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects of the invention are provided by the subject matter of the following clauses:
1. An Electronic Flight Bag (EFB), comprising memory storing a configuration data file defining a set of data format definitions associated with a corresponding set of avionics systems, the set of data format definitions different from one another, an application module configured to utilize a set of universal format data, and a data converter module configured to receive data from any of the set of avionics systems, to adapt the received data to the set of universal format data based on the configuration data file, and to provide the set of universal format data to the application module.
2. The EFB of any preceding clause, wherein the set of avionics systems includes at least one Flight Management System (FMS).
3. The EFB of any preceding clause, wherein the set of data formats are associated with the formatting of flight plan data of the at least one FMS.
4. The EFB of any preceding clause, wherein the set of avionics systems includes at least a first FMS and a second FMS, and wherein the set of data formats include at least a first data format and a second data format, the first data format associated with the formatting of flight plan data of the first FMS and the second data format associated with the formatting of flight plan data of the second FMS, and wherein the first data format and the second data format are different.
5. The EFB of any preceding clause, wherein the data converter module is further configured to adapt the received data to a set of universal format data defining at least one of a common numbered-bit waypoint format, a common number of types of segments, or a common numbered-bit prediction blocks.
6. The EFB of any preceding clause, wherein the data converter module is further configured to provide the set of universal format data to the application module in real-time.
7. The EFB of any preceding clause, wherein the set of avionics systems are associated with a set of different aircraft, and wherein the data converter module is configured to provide the set of universal format data to the application module from any of the set of different aircraft.
8. The EFB of any preceding clause, wherein the data converter module is further configured to provide a change request to the flight plan data of one of the first FMS or the second FMS by way of receiving universal format data including the change request from the application module, to adapt the received universal format data to one of the first data format or the second data format based on the configuration data file, and to provide the one of the first data format change request or the second data format change request to the one of the first FMS or the second FMS.
9. The EFB of any preceding clause wherein the one of the first data format change request or the second data format change request is a native data format of the respective one of the first FMS or the second FMS.
10. The EFB of any preceding clause, further comprising a display module, and wherein the application module is configured to display at least a subset of the universal format data.
11. The EFB of any preceding clause, wherein the data converter module is further configured to adapt the received data by way of at least one of adjustments, changes, manipulation, or abstraction.
12. The EFB of any preceding clause, wherein the data converter module is further configured to adapt the received data to increase the readability of the received data.
13. The EFB of any preceding clause, wherein the data converter module is configured to increase the readability of the received data by way of at least one of utilizing alternative vernacular descriptions of the data received or reordering the data received.
14. The EFB of any preceding clause, wherein the configuration data file is updateable without redevelopment of the application module.
15. The EFB of any preceding clause, further comprising a library data file configured to store multiple sets of received data.
16. The EFB of any preceding clause, wherein each of the set of data format definitions defines how to decode the received data, and under which behaviors and circumstances the decoded received data is reformatted.
17. The EFB of any preceding clause, wherein at least a subset of the data format definitions defines at least a first display format and a second display format, and wherein the subset of the data format definitions triggers one of the first display format or the second display format based on whether the received data satisfies a threshold data value.
18. The EFB of any preceding clause, wherein the data converter module is further configured to receive universal format data from the application module, to adapt the received universal format data to a set of avionics system format data based on the configuration data file, and to provide the set of avionics system format data to one of the set of avionics systems.
19. A specialized data network for a set of aircraft, including at least one avionics system for each of the set of aircraft, the at least one avionics system defining a set of avionic system data formats for exchanging data of the at least one avionics system and the specialized data network, and wherein the set of avionics system data format is different from at least one other at least one avionics system for another of the set of aircraft, and a removable Electronic Flight Bag (EFB), further including memory storing a configuration data file defining each of the set of avionics system data formats associated with the corresponding set of avionics systems, an application module configured to utilize a set of universal format data, and a data converter module configured to receive data from any of the at least one avionics system for each of the set of aircraft, to adapt the received data to the set of universal format data based on the configuration data file, and to provide the set of universal format data to the application module.
20. The specialized data network of any preceding clause, wherein the set of avionics system data formats are associated with the formatting of flight plan data of at least one Flight Management System (FMS).
21. A method for converting FMS data in a first format into data in a universal format.
22. An EFB adapted to automatically convert FMS data in a first format into data in a universal format.

## Claims

1. An Electronic Flight Bag (EFB) (20), comprising:
memory storing a configuration data file (48) defining a set of data format definitions associated with a corresponding set of avionics systems (18), the set of data format definitions different from one another;
an application module (52) configured to utilize a set of universal format data (54); and
a data converter module (50) configured to receive data from any of the set of avionics systems (18), to adapt the received data to the set of universal format data (54) based on the configuration data file (48), and to provide the set of universal format data (54) to the application module (52).

2. The EFB (20) of claim 1, wherein the set of avionics systems (18) includes at least one Flight Management System (FMS) (30, 31, 32, 33).

3. The EFB (20) of claim 2, wherein the set of data formats are associated with the formatting of flight plan data (34, 36) of the at least one FMS (30, 32).

4. The EFB (20) of any of claims 1-3, wherein the set of avionics systems (18) includes at least a first FMS (30, 31) and a second FMS (32, 33), and wherein the set of data formats include at least a first data format and a second data format, the first data format associated with the formatting of flight plan data (34) of the first FMS (30, 31) and the second data format associated with the formatting of flight plan data (36) of the second FMS (32, 33), and wherein the first data format and the second data format are different.

5. The EFB (20) of claim 4, wherein the data converter module (50) is further configured to adapt the received data to a set of universal format data (54) defining at least one of a common numbered-bit waypoint format, a common number of types of segments, or a common numbered-bit prediction blocks.

6. The EFB (20) of claim 5, wherein the data converter module (50) is further configured to provide the set of universal format data (54) to the application module (52) in real-time.

7. The EFB (20) of any of claims 4 to 6, wherein the set of avionics systems (18) are associated with a set of different aircraft (23, 25), and wherein the data converter module (50) is configured to provide the set of universal format data (54) to the application module (52) from any of the set of different aircraft (23, 25).

8. The EFB (20) of any of claims 4 to 7, wherein the data converter module (50) is further configured to provide a change request to the flight plan data (34, 36) of one of the first FMS (30, 31) or the second FMS (32, 33) by way of receiving universal format data (54) including the change request from the application module (52), to adapt the received universal format data (54) to one of the first data format or the second data format based on the configuration data file (48), and to provide the one of the first data format change request or the second data format change request to the one of the first FMS (30, 31) or the second FMS (32, 33).

9. The EFB (20) of claim 8 wherein the one of the first data format change request or the second data format change request is a native data format of the respective one of the first FMS (30, 31) or the second FMS (32, 33).

10. The EFB (20) of any of claims 1-9, further comprising a display module (60), and wherein the application module (52) is configured to display at least a subset of the universal format data (54).

11. The EFB (20) of any of claims 1-10, wherein the data converter module (50) is further configured to adapt the received data by way of at least one of adjustments, changes, manipulation, or abstraction.

12. The EFB (20) of any of claims 1-11, wherein the data converter module (50) is further configured to adapt the received data to increase the readability of the received data.

13. The EFB (20) of claim 12, wherein the data converter module (50) is configured to increase the readability of the received data by way of at least one of utilizing alternative vernacular descriptions of the data received or reordering the data received.

14. The EFB (20) of any of claims 1-13, wherein the configuration data file (48) is updateable without redevelopment of the application module (52).

15. The EFB (20) of any of claims 1-14, further comprising a library data file (46) configured to store multiple sets of received data.
